# EUROPEAN PATENT APPLICATION

(11) **EP 1 662 431 A1**
(43) Date of publication of application: **31.05.2006**
(21) Application number: 05109932.3
(22) Date of filing: 25.10.2005
(51) Int. Cl.: G06Q 10/00

(54) **Efficient and flexible business modeling based upon structured business capabilities**

(30) Priority: 29.11.2004 US 999852; 09.03.2005 US 76142
(71) Applicant: MICROSOFT CORPORATION, Redmond, Washington 98052-6399 (US)
(72) Inventor: Appel, David Benjamin, 98052, Redmond (US); Davidson, Elizabeth L., 98052, Redmond (US); Merrifield Jr., Eric Sabbaton, 98052, Redmond (US); Levy, Marc, 98052, Redmond (US); Judah, Norman B., 98052, Redmond (US); Isaacs, Scott M., 98052, Redmond (US); Homann, Ulrich, 98052, Redmond (US)
(74) Representative: Zimmer, Franz-Josef

(57) **Abstract**

The present invention extends to efficient and flexible business modeling based upon structured business capabilities. A computer system receives a plurality of business modeling attributes representing different layers of a business. The computer system extracts business capability attributes from among the received plurality of business modeling attributes. The computer system accessing a structured data model that defines data formats for the extracted business capability attributes. The computer system formats the extracted business capability attributes in accordance with the data formats defined in the structured data model. The computer system models a business capability based upon the formatted business capability attributes. A structured data model can include a capability modeling schema having data format definitions that define how business capability attributes are to be represented. Networks of business capabilities can be modeled and attributes from other business layers can be (re)attached to modeled business capabilities.

## Description

### CROSS-REFERENCE TO RELATED APPLICATIONS

Not applicable.

### BACKGROUND OF THE INVENTION

1. **The Field of the Invention**

The present invention relates to business modeling and, more particularly, to efficient and flexible business modeling based upon structured business capabilities.

2. **The Relevant Technology**

Businesses have complex operations.. An understanding of these operations is important to a business in order to, for example, prepare for change, account for costs, etc. Accordingly, various mechanisms have been developed to model and represent businesses. Some mechanisms include manual generation of diagrams that represent business processes that describe how work is done. For example, trained individuals can analyze all aspects of a business to identify business capabilities and interrelationships and interdependencies between the business processes. Based on the analysis, the trained individuals can generate the representative diagrams. However, accurate analysis of a business from a business process point-of-view can take an extended period of time. Further, once representative diagrams are generated such diagrams are not easily modified.

Unfortunately, since many business processes are dynamic (i.e., can change over time), a manually generated representation of business processes may be outdated before it is even completed. Further, even if a manually generated representation of business processes were accurate at the time it was completed, any change in business processes after the business representation is generated would cause the business representation to be incorrect. Thus, manually generated representations provide limited, if any, ability for a business to determine how simulated and/or hypothetical changes to various business capabilities would affect the business.

At least in part as a result of the deficiencies in manually generated business representations, some computerized mechanisms have been developed to generate business representations. These computerized mechanisms use various techniques to represent business and the required business functions mostly focused on modeling business processes and detailed procedures that support those processes. For example, some computerized mechanisms present a graphical view of business processes at a user-interface. To some limited extent, these graphical views can be altered to simulate the effect of different business capabilities on a business.

However, most of these computerized mechanisms focus on "how" the business is executed, conflating (or combining) various different layers (or types) of input data, such as, for example, organizational structures, procedures, process flows, and supporting technology. The stability of the input data (i.e., the half life of the information represented) potentially varies dramatically between the different input layers (or types), rendering the useful life time of a generated view only as valid as the least stable input. Conflating (or combining) interrelated, yet non-dependent, input data together can also result in obscured views of how a business functions and lead to unnecessary and costly improvement efforts of the modeled business, without the ability to determine the effect of changes in each individual layer.

Further, computerized mechanisms often include hard-coded data types and hard-coded representations for business modeling input data. These hard-coded data types and representations can be difficult to alter without access to source code. Thus, the flexibility and extensibility of modeling businesses and generating corresponding views is limited. For example, it may difficult to alter pre-defined data formats such that a business capability can be represented in a different way or such that a previously undefined business capability can be added.

Accordingly, what would be advantageous are systems, methods, computer program products, and data structures for efficient and flexible business modeling based upon structured business capabilities.

### BRIEF SUMMARY OF THE INVENTION

The foregoing problems with the prior state of the art are overcome by the principles of the present invention, which are directed towards methods, systems, computer program products, and data structures for efficient and flexible business modeling based upon structured business capabilities. A computer system receives a plurality of business modeling attributes, such as, for example, business capability attributes, business procedure attributes, business process flow attributes, and business organizational attributes, etc., corresponding to a business. The computer system extracts business capability attributes from among the received plurality of business attributes. The computer system accessing a structured data model that defines data formats for the extracted business capability attributes. The computer system formats the extracted business capability attributes in accordance with the data formats defined in the structured data model. The computer system models a business capability of the business based upon the formatted business capability attributes.

A structured data model can include a capability modeling schema having data format definitions that define how business capability attributes are to be represented. A capability modeling schema can include data format definitions for a number of different business capability models. Within each business capability model, the capability modeling schema can include data format definitions for many different types of business capability attributes, such as, for example, business capability properties, business capability inputs and outputs, business capability processes, business capability connections, and business capability service level expectations.

In some embodiments, a computer system accesses business capability attributes that were extracted from among a received plurality of business modeling attributes corresponding to a business architecture. The computer system formats the accessed business capability attributes in accordance with data formats defined in a structured data model. The computer system models a business capability network for the business architecture (e.g., including business capabilities and corresponding connections) based on the formatted business capability attributes.

These and other features of the present invention will become more fully apparent from the following description and appended claims, or may be learned by the practice of the invention as set forth hereinafter.

### BRIEF DESCRIPTION OF THE DRAWINGS

To further clarify the above and other advantages and features of the present invention, a more particular description of the invention will be rendered by reference to specific embodiments thereof which are illustrated in the appended drawings. It is appreciated that these drawings depict only typical embodiments of the invention and are therefore not to be considered limiting of its scope. The invention will be described and explained with additional specificity and detail through the use of the accompanying drawings in which:

Figure 1 illustrates an example computer architecture that can be used to implement efficient and flexible business modeling based upon structured business capabilities.

Figure 2 illustrates a more detailed architecture for identifying business modeling attributes having sufficient stability.

Figure 3 illustrates an example capability modeling schema that can be used for efficiently and flexibly business modeling based upon structured business capabilities.

Figure 4 illustrates an example flowchart of a method for efficient and flexible business modeling based upon structured business capabilities.

Figure 5A illustrates an example of a modeled business capability.

Figure 5B illustrates a first view of an example of a network of modeled business capabilities including the modeled business capability in Figure 5A.

Figure 5C illustrates a second view of the example of a network of modeled business capabilities in Figure 5B

Figure 6 illustrates a suitable operating environment for the principles of the present invention.

Figure 7 illustrates an example flowchart of a method for modeling a network of business capacities.

### DETAILED DESCRIPTION OF THE PREFERRED EINIBODIMENTS

The principles of the present invention provide for efficient and flexible business modeling based upon structured business capabilities. A computer system receives a plurality of business modeling attributes, such as, for example, business capability attributes, business procedure attributes, business process flow attributes, and business organizational attributes, etc., corresponding to a business. The computer system extracts business capability attributes from among the received plurality of business attributes. The computer system accessing a structured data model that defines data formats for the extracted business capability attributes. The computer system formats the extracted business capability attributes in accordance with the data formats defined in the structured data model. The computer system models a business capability of the business based upon the formatted business capability attributes.

A structured data model can include a capability modeling schema having data format definitions that define how business capability attributes are to be represented. A capability modeling schema can include data format definitions for a number of different business capability models. Within each business capability model, the capability modeling schema can include data format definitions for many different types of business capability attributes, such as, for example, business capability properties, business capability inputs and outputs, business capability processes, business capability connections, and business capability service level expectations.

In some embodiments, a computer system accessing business capability attributes that were extracted from among a received plurality of business modeling attributes corresponding to a business architecture. The computer system formats the accessed business capability attributes in accordance with data formats defined in a structured data model. The computer system models a business capability network for the business architecture (e.g., including business capabilities and corresponding connections) based on the formatted business capability attributes.

Embodiments within the scope of the present invention include computer-readable media for carrying or having computer-executable instructions or data structures stored thereon. Such computer-readable media may be any available media, which is accessible by a general-purpose or special-purpose computer system. By way of example, and not limitation, such computer-readable media can comprise physical storage media such as RAM, ROM, EPROM, CD-ROM or other optical disk storage, magnetic disk storage or other magnetic storage devices, or any other media which can be used to carry or store desired program code means in the form of computer-executable instructions, computer-readable instructions, or data structures and which may be accessed by a general-purpose or special-purpose computer system.

In this description and in the following claims, a "computer network" is defined as one or more data links that enable the transport of electronic data between computer systems and/or modules. When information is transferred or provided over a computer network or another communications connection (either hardwired, wireless, or a combination of hardwired or wireless) to a computer system, the connection is properly viewed as a computer-readable medium. Thus, any such connection is properly termed a computer-readable medium. Combinations of the above should also be included within the scope of computer-readable media. Computer-executable instructions comprise, for example, instructions and data which cause a general-purpose computer system or special-purpose computer system to perform a certain function or group of functions. The computer executable instructions may be, for example, binaries, intermediate format instructions such as assembly language, or even source code.

In this description and in the following claims, a "computer system" is defined as one or more software modules, one or more hardware modules, or combinations thereof, that work together to perform operations on electronic data. For example, the definition of computer system includes the hardware components of a personal computer, as well as software modules, such as the operating system of the personal computer. The physical layout of the modules is not important. A computer system may include one or more computers coupled via a computer network. Likewise, a computer system may include a single physical device (such as a mobile phone or Personal Digital Assistant "PDA") where internal modules (such as a memory and processor) work together to perform operations on electronic data.

In this description and in the following claims, a "business modeling attribute" is defined as any attribute that can be used to model a business or part of a business. Different business modeling attributes can correspond to modeling different aspects (or layers) of a business. Thus, business modeling attributes can generally be divided into subsets of different types of business modeling attributes, such as, for example, business organizational attributes, business procedure attributes, business process flow attributes, business capability attributes, etc. Accordingly, each subset of business modeling attributes can be used to model a corresponding business aspect (or business layer). For example, business organizational attributes can be used to model business organizational structures, business procedure attributes can be used to model business procedures, business process flow attributes can be used to model business process flows, business capability attributes can be used to model business capabilities, etc. Further, it would be apparent to one skilled in the art, after having reviewed this description, that other subsets of business modeling attributes, in additional to those expressly described, can be used to model other corresponding business aspects (or business layers).

Thus, in this description and in the following claims, "business capability attributes" are defined as a subset of business modeling attributes that correspond to modeling business capabilities. Business capability attributes are defined to include: business capability data (what kind of data is used by the capability), business capability applications, business capability communications, business capability relationships, business capability dependencies, business capability connections (e.g., to other business capabilities), and business capability boundaries. Business capability dependencies can include, for example, what needs to happen for the capability to start, what needs to happen for the business capability to finish, what other business capabilities depend in the business capability. Business capability boundaries can include, for example, indications of a business capability being influenced by entities, processes, or technology internal to a business and regulations and entities (e.g., partners or customers) external to the business.

Business capability attributes are also defined to include measurement and analysis attributes of a business capability. Measurement and analysis attributes can indicate how the success of a business capability is measured, who owns the business capability, who is the customer of the capability, notification criteria for variations in the business capability, workarounds if a business capability is not available, acceptable variations in inputs to and outputs of the business capability, the stability and/or volatility of the business capability, the importance of the capability, etc.

Business capability attributes can also correspond to Service Levels. Service Level Agreement ("SLA") attributes can indicate an agreement the business capability is to adhere to. Service Level Expectation ("SLE") attributes can indicate a service level expectation, such as, for example, a less formal and/or non-contractual based expectation of what a business capability is to do. A SLE can be used to indicate how the success of a corresponding business capability is measured (either subjectively or objectively), who owns the business capability, who is the customer of the capability. An SLE can also be used to indicate what has an impact of the outcome the business capability, such as, for example, people, process, technology, inputs, outputs, etc. For inputs (e.g., people, process, technology, etc), an SLE can indicate the acceptable variation on quality and volume that will the business capacity to perform its functions. For outputs, an SLE can indicate the acceptable variations in time, volume, and quality and corresponding thresholds.

An SLE can include an indication of escalation/notification criteria for variations, what is the timeframe for escalation/notification, how escalation/notification impact other timelines, schedules, or success metrics. An SLE can also include potential workarounds if the business capability becomes unavailable.

An SLE can indicate the stability/volatility of the business capability, for example, how often does the capability change, how much of the business capability is related to normal day-to-day activity, and how much of the business capability is exception based. An SLE can also indicate how critical and/or core a business capability is to the overall goals and success of a business. Embodiments of the present invention can be configured to model business capabilities based upon SLE attributes for representing these (as well as other aspects) ofSLEs.

Service Level Goal ("SLG") attributes can indicate business capability goals for specified periods of time, for example, weeks, months, quarters, etc. Service Level Potential ("SLP") attributes can indicate a capability range (e.g., minimum/maximum units per hours) of a business capability. Service Level History ("SLH") attributes can indicate how a business capability has performed over a specified period of time, for example, the last week, month, etc. Service Level Delta ("SLD") attributes can indicate when a capability will change, for example, in the context of a Change Lifecycle, and can indicate a planned delta in the SLE, SLP, and SLG that will result.

In this description and the following claims, a "business architecture" is defined as the overall design of at least a portion of a business. A business architecture for a company or one or more portions of a company can include business layers that span various boundaries inside and/or outside of the company. For example, a company's business architecture can span externally physical boundaries (e.g., walls, buildings, etc.), internally physical boundaries (e.g., divisions, departments, etc.), and logical boundaries (e.g., a fiscal year end, a perceived service boundary, security etc.). Thus, an outsourced business capability can be viewed as part of the business architecture for a company even though the outsourced business capability is not performed by the company. Business architectures can be past, current (as-is), or future (to-be) architectures of an entire business or one or more portions of a business. A portion of a business can be a specific sub-network or set of sub-networks of business capabilities.

Generally, the stability (or volatility) of different types of business modeling attributes corresponding to different aspects (or layers) of a business can vary. That is, one type of business modeling attributes can be more or less stable relative to other types of business modeling attributes. For example, business procedure attributes for modeling business procedures may be more stable than business organizational attributes for modeling business organizational structure. On the other hand, business procedure attributes for modeling business procedures may be less stable than business capability attributes for modeling business capabilities.

To initially generate more stable business models, more stable business modeling attributes can be extracted from less clear, less stable business modeling attributes. Thus, more stable business models (e.g., that represent "what" a business does.) can be created. For example, it may be that business capability attributes are extracted from a set of business modeling attributes that includes business capability attributes, business organization attributes, business procedure attributes, and business process flow attributes. Thus, a business model can initially model business capabilities, business capability SLEs, business capability inputs, business capability outputs, business capability connections, and business capability groupings.

Less stable business modeling attributes (e.g., representing "how" business is done) can be initially abstracted out (or otherwise removed from) modeling a business. For example, business organization attributes, business procedure attributes, and business process flow attributes may initially be abstracted out of a business model. However, the initial model can retain placeholders for incorporating less stable business modeling attributes (e.g., elaborated outside of a business capability model) back into the model. Thus, these less stable attributes can be re-attached or re-associated with the model, for example, after a clear model of business capabilities has been generated. Accordingly, the stability of a business model can be easily varied based on the needs of a business.

Embodiments of the present invention can utilize attribute selection criteria that limit the types of business modeling attributes that are to be used to model a business or part of business. Attribute selection criteria can be used to extract specified types of (e.g., more stable) business modeling attributes that are to be used to initially model a business or to identified specified (e.g., more stable) layers from which business modeling attributes are to be taken to initially model a business. Business modeling attributes that satisfy attribute selection criteria can be selected for modeling the business.

Attribute selection criteria are configurable such that more or less stable models and more or less detailed models can be generated. Attribute selection criteria can be made more strict thus reducing the types of business modeling attributes that satisfy the attribute selection criteria. For example, attribute selection criteria can be configured such that only business capability attributes are used to model a business or part of a business. Thus, a more stable (more objective) but less detailed model can be generated.

On the other hand, attribute selection criteria can be made less strict thus increasing the types of business capability attributes that satisfy the stability threshold data. For example, attribute selection criteria can be configured such that business capability attributes, business procedure attributes, and business process flow attributes are used to model a business or part of a business. Thus, a less stable (more subjective) but more detailed model can be generated. Accordingly, attribute selection criteria can be varied based on the needs of a business to appropriately model that business.

In some embodiments, a received business modeling attributes can include a data field that stores a business modeling attribute type. To determine if a received business modeling attribute is sufficiently stable for initial inclusion in a business model, the business modeling attribute type can be compared to attribute selection criteria. When appropriate, for example, when a received business modeling attribute type satisfies the attribute selection criteria, the received business modeling attribute can be identified for use in modeling a corresponding business.

In other embodiments, a business modeling attribute type is calculated by an attribute typing algorithm. The calculated business modeling attribute type (e.g., as business capability attribute) is then compared to attribute selection criteria to determine the sufficiency of the calculated business modeling attribute type .

In yet other embodiments, a modeler (e.g., a human user) specifies business modeling attribute types before submitting a set of business modeling attributes for modeling. Thus, when appropriate, a modeler can configure business modeling attributes such that all submitted business modeling attributes are used to model a corresponding business.

The configuration of attribute selection criteria (or other mechanisms) for extracting specified business modeling attributes types or extracting business modeling attributes from specific business layers, whether made by a developer, administrator, or modeler, can be based on a objective determinations and/or subjective determinations for modeling a business. For example, since business capability attributes can be used to represent "what" a business does, it can be objectively determined that business capability attributes are more stable and are to be extracted for inclusion in initial more stable business models.

On the other hand, since business procedure attributes and business process flow attributes can used, at least to some extent, to represent "how" business is done, it may be a subjective determination on whether either or both of these types of business modeling attributes are to be extracted for inclusion in an initial business model. Similarly, it may be a subjective determination on whether either or both of these types of business modeling attributes are to be later re-attached or re-associated with an initial business model after more stable business modeling attributes are modeled.

In this description and in the following claims, a "schema" is defined as an expression of a shared vocabulary between a plurality of computer systems or modules that allows the plurality of computer systems or modules to process data according the expressed shared vocabulary. A schema can define and describe classes of data using constructs (e.g., name/value pairs) of a schema language. The schema constructs can be used to constrain and document the meaning, usage, and relationships of data types, elements and their content, attributes and their values, entities and their contents, and notations, as used in a specified application, such as, for example, a business capability model. Thus, any computer system or module that can access a schema can process data in accordance with the schema. Further, any computer system or module that can access a schema can compose or modify data for use by other computer systems and/or modules that can also access the schema.

A schema can be utilized to define virtually any data type including logical, binary, octal, decimal, hexadecimal, integer, floating-point, character, character string, user-defined data types, and combinations of these data types used to defined data structures. Some examples of user-defined data types are business capability properties, business capability inputs and outputs, business capability processes, business capability connections, and business capability service level expectations. A data type can also be defined to reference of link to other data types in a schema hierarchy.

An extensible Markup Language ("XML") schema is one example of a type of schema. An XML schema can define and describe a class of XML documents using schema constructs (e.g., name/value pairs) of an XML schema language. These schema constructs can be used to constrain and document the meaning, usage, and relationships of data types, elements and their content, attributes and their values, entities and their contents, and notations, as used in XML documents. Thus, schema is also defined to include Document Type Definitions ("DTD"), such as, for example, DTD files ending with a ".dtd" extension and World Wide Web Consortium ("W3C") XML Schemas, such as, for example, XML Schema files ending with a ".xsd" extension. However, the actually file extension for a particular DTD or XML schema is not important.

Those skilled in the art will appreciate that the invention may be practiced in computer network environments with many types of computer system configurations, including, personal computers, laptop computers, hand-held devices, multi-processor systems, microprocessor-based or programmable consumer electronics, network PCs, minicomputers, mainframe computers, mobile telephones, PDAs, pagers, and the like. The invention may also be practiced in distributed system environments where local and remote computer systems, which are linked (either by hardwired data links, wireless data links, or by a combination of hardwired and wireless data links) through a computer network, both perform tasks. In a distributed system environment, program modules may be located in both local and remote memory storage devices.

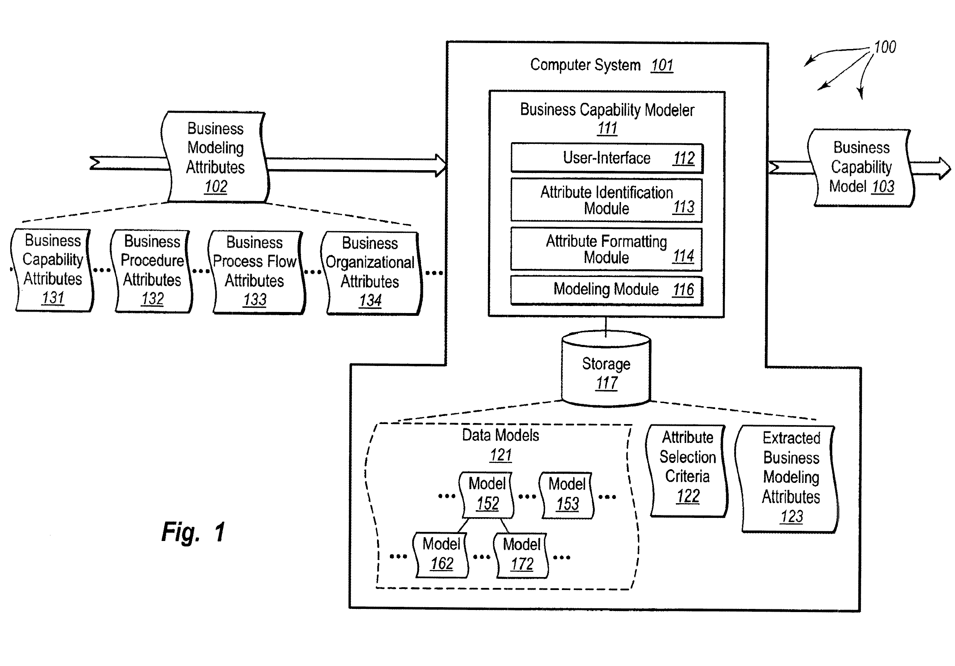

Figure 1 illustrates an example computer architecture 100 that can be used to flexibly model business functions based on stable criteria. As depicted in computer architecture 100, computer system 101 includes business capability modeler 111 and storage 117. Business capability modeler 111 further includes user-interface 112, attribute identification module 113, attribute formatting model 114, and modeling module 116. User-interface 112 is configured to interface between a computer system user and computer system 101. User-interface 112 can provide an interface for the computer system user to enter data (e.g., business capability attributes) into business capability modeler 11 and to view presented business capability models presented by business capability modeler 111.

Attribute identification model 113 is configured to identify (and extract) more stable business modeling attributes, such as, for example, business capability attributes, from among business modeling attributes received at business capability modeler 111. Attribute identification model 113 can refer to attribute selection criteria 122 to identify business modeling attributes of a specified type, from a specified layer, or that otherwise meet a specified threshold of stability. Business modeling attributes 102 includes business capability attributes (e.g., from a business capability business layer), business procedures attributes (e.g., from a business procedures layer), business process flow attributes (e.g., from a business process flow layer), and business organizational attributes (e.g., from a business organizational structure layer).

A series of two periods (an ellipsis) before, between, and after the expressly depicted attributes 131, 132, 133, and 134 represents that business modeling attributes from other business layers can also be included in business modeling attributes 102. Attributes 131, 132, 133, and 134 are depicted as separate portions of data to represent some of the types of business modeling attributes that can be included in business modeling attributes 102. However, it should be understood that attributes from different business layers can be intermingled within business modeling attributes 102 (e.g., as a single binary file) and not necessary included as separate portions of data.

Attribute identification module 113 can compare business modeling attributes 102 to attribute selection criteria 122 to determine if any business modeling attributes included in business modeling attributes 102 (e.g., business modeling attributes from a particular business layer or layers) satisfy attribute selection criteria 122. For example, attribute selection criteria 122 can indicate that business capability attributes are to be identified and extracted from business modeling attributes 102. Accordingly, attribute identification model can identify and extract business capability attributes 131 from business modeling attributes 102. Extracted business modeling attributes (from any business layer) that satisfy attribute selection criteria 122 can be stored at storage 117, for example, in extracted business modeling attributes 123.

Generally, computer system 101 can access any number of different data models for generating corresponding business models. For example, computer system 101 has access at least to data models 121, which includes models 152, 162, 172 and 153. In some embodiments, a model is a parent model for one or more other models. For example, within data models 121, model 152 is a parent model of models 162 and 172.

It may be that different data models are used to generate business models based upon different types of business modeling attributes and/or upon business modeling attributes from different business layers. For example, model 152 can be used to generate business models based upon business procedure attributes and model 153 can be used to generate a business models based upon business organizational attributes. On the other hand, it may also be that different data models are used to generate business models based upon the same type of business modeling attributes or upon business modeling attributes from the same business layer. For example, both model 162 and model 172 can be used to generate business models based upon business capability attributes. Accordingly, business modeling attributes can be re-used across different models.

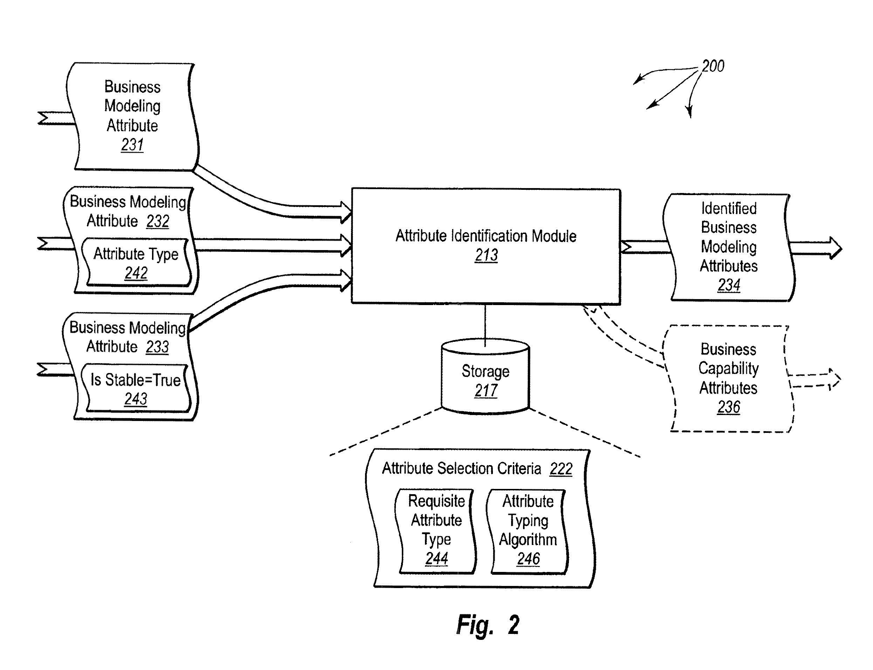

Referring now to Figure 2, Figure 2 illustrates a more detailed architecture 200 for identifying and extracting business modeling attributes having sufficient stability. As depicted in architecture 200, attribute identification module 213 is configured to receive business modeling attributes, determine if received business modeling attributes satisfy attribute selection criteria, and extract identified (e.g.,. more stable) business modeling attributes for modeling. For example, attribute identification module 213 can receive business modeling attribute 231, business modeling attribute 232, and business modeling attribute 233. Based on attribute selection criteria 222, attribute identification module 213 determines if a received business modeling attribute (e.g., any of attribute 231, capability attribute 232, and capability attribute 233) is to be extracted for modeling (e.g., is a more stable business modeling attribute). Attribute identification module 213 extracts identified business modeling attributes for modeling.

In some embodiments, attribute identification module 213 receives an absolute stability value corresponding to a capability attribute. For example, business modeling attribute 233 includes IsStable= TRUE 243. IsStable= TRUE 243 (or any other type of absolute stability value) indicates to attribute identification module 213 that business modeling attribute 233 is to be extracted for modeling (independent of attribute type or corresponding business layer). Accordingly, attribute identification module 213 can extract business modeling attribute 233 into identified business modeling attributes 234 (e.g., for storage in extracted business modeling attributes 123) such that business modeling attribute 233 can be used when modeling a corresponding business. Similarly, a business modeling attribute can include an absolute stability value (e.g., FALSE) indicating that the capability attribute is not to be extracted for (e.g., initial) modeling. However, such a business modeling attribute can be included so the business modeling attribute can be subsequently re-attached to or re-associated with an business model based upon more stable business modeling attributes, such as, for example, a business capability model.

In other embodiments, attribute identification module 213 receives an attribute type identifying a specifed business modeling attribute type and/or corresponding to a specifed business layer. For example, business modeling attribute 232 includes attribute type 242. Attribute type 242 can store an attribute value representative of a corresponding type of business modeling attribute and/or of a corresponding business layer (e.g., business capability layer, business procedure layer, etc.).

In yet other embodiments, attribute identification module 213 receives no addtional information for a business modeling attribute. For example, business modeling attribute 231 does not include a an attribute type or absolute stability value. Accordingly, attribute identification module 213 can refer to attribute typing algorithm 246 to generate an attribute type value for business modeling attribute 231. Attribute identification module 213 can provide business modeling attribute 231 as input to attribute typing algorithm 246 and attribute typing algorithm 246 can return a corresponding attribute type or absolute stability value for business modeling attribute 231 to attribute identification module 213. Attribute type algorithm 246 can analyze the characteristics of business modeling attribute 231 to calculate an attribute type (e.g., business capability attribute) for business modeling attribute 231.

Attribute identification module 213 can compare a received attribute types (e.g., attribute type 242 242) or a calculated attribute type (e.g., for business modeling attribute 231) to requisite attribute value 244. Requisite stability value 244 is a configurable value (or values) (e.g., for different business modeling attribute types) that can be set based on the needs of a particular capability modeling scenario. For example, requisite attribute type value 244 can be configured such that only business capability attributes satisfy attribute selection criteria 222, thus reducing the number of business modeling attributes that are to be (e.g., initially) modeled. Accordingly, a more stable (more objective) but less detailed model can be generated. On the other hand, requisite attribute type 244 can be configured such that business capability attributes, business procedure attributes, and business organizational attributes satisfy attribute selection criteria 222, thus increasing the number of business modeling attributes that are to be (e.g., initially) modeled. Accordingly, a less stable (more subjective) but more detailed model can be generated.

When appropriate, for example, when attribute type 242 or a calculated attribute type is included in requirest attribute type 244, a business modeling attribute can be stored in along with other business capability attributes (e.g., in extracted business modeling attributes 123). Received business modeling attributes that do not satisfy attribute selection criteria 222 can subsequently be re-attached to or re-associated with a model generated from received business modeling attributes that do satisfy attribute selection criteria 222.

In some embodiments, attribute identification module 213 and/or attribute identification module 113 are configured (using any of the previous described or even other mechanisms) to extract business capability attributes from received business modeling attributes. Thus, is may be that any extracted business modeling attributes are business capability attributes. For example, attribute identification module 213 can identify business capability attributes 236.

Referring back to Figure 1, attribute formatting module 114 is configured to format business modeling attributes (e.g., business capability attributes) in accordance with data formats in data models 121. Each model in data models 121 can include one or more schemas for formatting business modeling attributes. Accordingly, attribute formatting module 114 can retrieve business modeling attributes from extracted business attributes 123 (e.g., business capability attributes) and format the extracted business modeling attributes in accordance with a schema of data models 121. For example, attribute formatting module 114 can format a "fixed cost allocation" attribute to be of a currency data type based on data definitions in a schema of data models 121.

Modeling module 116 is configured to graphically represent formatted business modeling attributes as a business model. For example, modeling module 116 can model business model 103 from formatted business capability attributes corresponding to one or more business capabilities. Modeling module 116 can present business model 103 at user-interface 112.

As previously described, data models 121 can include one or more models for formatting business modeling attributes. Different models can be utilized to model different business modeling attribute types and/or business modeling attributes from different business layers. Thus in some embodiments, data models 121 can include at least one business capability modeling schema for modeling business capability attributes, at least one business procedure modeling schema for modeling business procedure attributes, at least one business process slow modeling schema for modeling business process flow attributes, at least one business organizational structure modeling schema for modeling business organizational attribute, etc.

In some embodiments, business models and data format definitions can be generally described as indicated in Table 1.

**Table 1**

| | |
|---|---|
| Models | Models serve to group capabilities into distinct groups that describe a single business. Models can contain all the capabilities defined for the business as well as how any defined capabilities relate to each other in terms of hierarchical decomposition and process flow relationships. Models facilitate the segmentation of data in a repository into distinct business models which can be compared with one another but are separate from each other. Further, while capability data is defined within a model, other data elements of the data model are outside of the model and facilitate the comparison of different models with one another. |
| Capabilities | Capabilities are individual business functional areas that are modeled in at least three different ways in the model. Capabilities can be modeled as individual things with their own set of properties; as a decomposition hierarchy of functional areas; and as connected in simple business process flows. Coarser (or higher level) capabilities can include a set of more granular (or lower level) capabilities, such as , for example, when a higher level capability is decomposed into its constituent parts. The assignment of properties to capabilities may occur at multiple levels in a hierarchy, which can be used to control later data transformations. For example, when a higher level capability is manipulated through a transformation, corresponding lower level capabilities' properties can be considered in the transformation |
| Capability Inputs and Outputs | Capability Inputs and Outputs are the artifacts and events that are consumed and/or produced by business capabilities. They represent what is outward and visible about the behavior of the capabilities. Inputs can be consumed and outputs can be produced independently of other inputs and outputs. For example, there is no requirement that all the inputs for a capability be consumed before the capability starts. Likewise, there is no requirement that all the processing of a capability be completed before an output can be produced. |
| Processes | Processes are networks of business capabilities that are connected in a flow to illustrate and end-to-end view of a business process. Processes define the connections between capabilities that enable larger business functions. Processes modeled in the data model can refer to cross-capability processes that represent traversal of boundaries between capabilities. |
| Connections | Connections are used to represent relationships between business capabilities. Connections can be data connections over which data, such as, for example, a business document, can flow between those capabilities. However, other types of connections are also possible. Connections may also refer to oversight or management of a business function, as frequently occurs in regulated areas of business activity. Connections can be typed such that connection types are the same across all models. Typed connections can be used to facilitate model comparisons. |
| Service Levels | Service levels refer to the general expectation of the performance of a capability. Service levels attach performance and accountability attributes to a capability in varying degrees of formality (e.g., contractual) and time (e.g., historical, current, target, and maximum). In some embodiments, a capability includes a verb and noun phrase (or such a verb-noun phrase can be construed from the capability description). Service level descriptive data associated with the capability indicates how well the capability performs the action implied by the phrase. For example, Approve Loan Application might have a service level expectation of 2 days. |

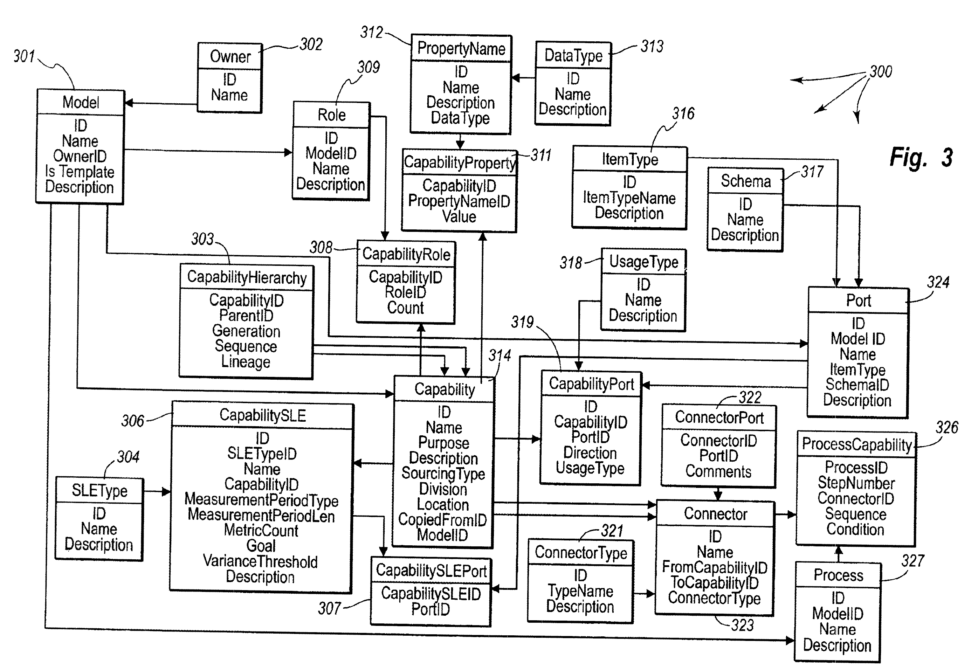

Figure 3 illustrates an example business capability modeling schema 300 that can be used for efficiently and flexibly business modeling based upon structured business capabilities. Business capability modeling schema 300 can include data formats for modeling business capability properties, business capability inputs and outputs, business capability processes, business capability connections, and business capability service level expectations. It should be understood that business capability modeling schema 300 can be one of a plurality of schemas that includes data definitions for modeling a corresponding plurality of different business modeling attributes.

Depicted in Figure 3, schema 300 includes model data format 301. Generally, model data format 301 can be described as indicated in Table 2.

**Table 2**

| Name | Data Type | Description |
|---|---|---|
| ID | int | Key to the model and is used to relate other data entities to this model. |

| Name | varchar(150) | A unique name that identifies the model. |
|---|---|---|
| OwnerID | int | Points to the owner of the model. An owner can own many models. |
| IsTemplate | bit | Controls the ability of a modeler to modify this model. If this field is true, it means that this model is to be used as a template for other models and can thus be used to compare the derived models, even after properties are changed by modelers in the derived models. Therefore, this model cannot be changed by normal editors of models. Defaults to false |
| Description | varchar(2000) | Textual description of the model. |

Depicted in Figure 3, schema 300 includes owner data format 302. Generally, owner data format 302 can be described as indicated in Table 3.

**Table 3**

| Name | Data Type | Description |
|---|---|---|
| ID | int | Key to the owner and is used to relate other data entities to this owner. |
| Name | varchar(50) | Unique name of the owner. |

Depicted in Figure 3, schema 300 includes capability data format 314. Generally, capability data format 314 can be described as indicated in Table 4.

**Table 4**

| Name | Data Type | Description |
|---|---|---|
| ID | int | Key to the capability and is used to relate other data entities to this capability. |
| Name | varchar(256) | Name that is unique within a particular model. |
| Purpose | varchar (1000) | Short description of the capability. |
| Description | varchar(8000) | A more detailed description of the capability and may explain relationships and properties of this capability as well as the capability itself. |
| SourcingType | int | This field can have three values: Internal, Outsourced, or Both. It indicates whether or not the capability is performed by an organization that is internal (part of) the organization that "owns" the model; or an organization that is a supplier of the capability to the "owner" of the model; or it is performed by both internal and external suppliers. |
| Division | varchar(100) | Identifies the business organizational area where a capability is performed. |
| Location | varchar(100) | Geographical location where the capability is performed. |
| CopiedFromID | int | Indicates the specific capability (and hence template model) from which this capability was copied. Can be a system-set value. |
| ModelID | int | Indicates the model to which this capability belongs. |

Depicted in Figure 3, schema 300 includes capability hierarchy data format 303. Generally, capability hierarchy data format 303 can be described as indicated in Table 5.

**Table 5**

| Name | Data Type | Description |
|---|---|---|
| CapabilityID | int | Links to a capability. |
| ParentID | int | Links to a capability in the same model and indicates the parent of this capability in a hierarchical view of the model's capabilities. |
| Generation | int | Part of the lineage key which is used in certain queries. |
| Sequence | int | Part of the lineage key which is used in certain queries. |
| Lineage | varchar(20) | Indicates the entire ancestral lineage of a capability and used to perform hierarchical sorts. |

Depicted in Figure 3, schema 300 includes capability property data format 311. Generally, capability property data format 311 can be described as indicated in Table 6.

**Table 6**

| Name | Data Type | Description |
|---|---|---|
| CapabilityID | int | Links to a capability. |
| PropertyNameID | int | Links to a user-defined property. |
| Value | varchar(250) | Value of the property for this capability. |

Depicted in Figure 3, schema 300 includes property name data format 312. Generally, property name data format 312 can be described as indicated in Table 7.

**Table 7**

| Name | Data Type | Description |
|---|---|---|
| ID | int | Key to the property and is used to relate this property to capabilities. |
| Name | varchar(250) | Name of the property and is user defined. |
| Description | varchar(4000) | Description of what the property is and how it is to be used to describe capabilities. |
| DataType | int | Links to the DataType entity and indicates the type of data that is expected when a modeler sets a value for this property for a capability. If, for example, the modeler defines a property named "Fixed Cost Allocation", it is likely that the data type for this property would be "Currency". |

Depicted in Figure 3, schema 300 includes data type data format 313. Generally, data type data format 313 can be described as indicated in Table 8.

**Table 8**

| Name | Data Type | Description |
|---|---|---|
| ID | int | Key to the data type and is used to indicate the data type of a user defined property. This is one of a few tables that we assume are not modified by modelers as the modeling tools rely on the values being "known" in order to perform validations of property values correctly. |
| Name | varchar(20) | A friendly name of the data type. Examples are "Integer", "String", "Currency", etc. |
| Description | varchar(4000) | Any additional information about the data type that would be useful especially in guiding user selection of data types for the properties that they define. |

Depicted in Figure 3, schema 300 includes port data format 324. Ports corresponding to a business capability can be used to transfer input into and output out of the corresponding business capability. Generally, port data format 324 can be described as indicated in Table 9.

**Table 9**

| Name | Data Type | Description |
|---|---|---|
| ID | int | Key to the port and is used to relate this port to other entities. |
| ModelID | int | Indicates that this port belongs to the related model. When dealing with a particular model, only the ports associated with the model are available to the modeler. A port is something that is input to - consumed by - a capability or output from - produced by - a capability. |
| Name | varchar(256) | A unique name within the specific model. |
| ItemType | int | Links to the ItemType entity which indicates the type of input or output, which could be electronic data, a physical item, a fax, an event, etc. |
| SchemaID | int | If the itemtype indicates that this is an electronic data record of some kind, this field links to the schema that describes the content of the data record. |
| Description | varchar(4000) | A detailed description of the input/output item. |

Depicted in Figure 3, schema 300 includes capability port data format 319. Generally, capability port data format 319 can be described as indicated in Table 10.

**Table 10**

| Name | Data Type | Description |
|---|---|---|
| ID | int | Key to the capability port and is used to relate this port to other entities. |
| CapabilityID | int | Links to the capability that is referenced by this relationship. |
| PortID | int | Links to the port that is referenced by this relationship. |
| Direction | int | Has three values and indicates whether or not the item is input into the referenced capability, output from the referenced |
| | | capability, or it Hows both directions. |
| UsageType | int | Links to the UsageType entity and indicates how the capability uses this item. Examples are "Read only", "Read and update'', "Create", etc. |

Depicted in Figure 3, schema 300 includes usage type data format 318. Generally, usage type data format 318 can be described as indicated in Table 11.

**Table 11**

| Name | Data Type | Description |
|---|---|---|
| ID | int | Key to the UsageType and is used to relate this usage type to the input/output items (port entity). This table is assumed to be non-modifiable by modelers as the tools rely on its specific values to process models. |
| Name | varchar(150) | A unique name that identifies the usage type. Examples include "Read only", "Read and update", "Create", etc. |
| Description | varchar(4000) | A more detailed description of the usage type and how the modeling tools may behave when dealing with a specific usage type. |

Depicted in Figure 3, schema 300 includes item type data format 316. Generally, item type data format 316 can be described as indicated in Table 12.

**Table 12**

| Name | Data Type | Description |
|---|---|---|
| ID | int | Key to the ItemType and is used to relate this item type to the input/output items (port entity). This table is assumed to be non-modifiable by modelers as the tools rely on its specific values to process models. |
| ItemTypeName | varchar(150) | A unique name that identifies the usage type. Examples include "Electronic data", "Physical item", "Fax", etc. |
| Description | varchar(4000) | A more detailed description of the item type and how the modeling tools may behave when dealing with a specific item type. |

Depicted in Figure 3, schema 300 includes schema data format 317. Generally, schema data format 317 can be described as indicated in Table 13.

**Table 13**

| Name | Data Type | Description |
|---|---|---|
| ID | int | This is the key to the Schema entity and is used to relate this item type to the input/output items (port entity). |
| Name | varchar(250) | This is a unique name for a schema. |
| Description | varchar(4000) | This may be a detailed description of the data content for a data record in the form of an XML schema (or some simplification thereof). |

Depicted in Figure 3, schema 300 includes process data format 327. Generally, process data format 327 can be described as indicated in Table 14.

**Table 14**

| Name | Data Type | Description |
|---|---|---|
| ID | int | Key to the Process entity and is used to relate this item type to connector entities, and through them to the related capabilities in the ProcessCapability entity. |
| ModelID | int | Indicates the model that these processes belong to. |
| Name | varchar(256) | A unique name for a process within this model. |
| Description | varchar(4000) | Describes the process that is modeled by this entity and the ProcessCapability entities. |

Depicted in Figure 3, schema 300 includes process capability data format 327. Generally, process capability data format 327 can be described as indicated in Table 15.

**Table 15**

| Name | Data Type | Description |
|---|---|---|
| ProcessID | int | Indicates the process that this capabilities and connections belong to. |
| StepNumber | int | Indicates the sequence of this connection in the process and is used to sort the process steps for rendering in a visual model. |
| ConnectorID | int | Links to the Connector entity and through it to the source and target capabilities of a process flow from a source capability to a destination capability. |
| Sequence | int | Indicates the sequence of a connection within a step, thereby supporting process flows that have multiple paths through it. To define a path where one leg has more steps (or flows through more capabilities) than another leg, the shorter leg is represented by entries in this table that reference the same connector but different StepNumbers. |
| Condition | varchar(4000) | Stores comments on what the conditions are that drive the process. |

Depicted in Figure 3, schema 300 includes connector data format 323. Generally, connecter data format 323 can be described as indicated in Table 16.

**Table 16**

| Name | Data Type | Description |
|---|---|---|
| ID | int | Key to the Connector entity and indicates the connection between two capabilities. This key is used to link this connection to other entities. |
| Name | varchar(256) | A comment that is associated with this connection between two capabilities. |
| FromCapabilityID | int | References the capability that is the source capability. Depending on the ConnectorType, the meaning of being the source capability may differ slightly. |
| ToCapabilityID | int | References the capability that is the target capability. Depending on the ConnectorType, the meaning of being the target capability may differ slightly. |
| ConnectorType | int | Link to the ConnectorType entity and indicates what the relationship between the two referenced capabilities really means. Examples are "Collaborative", "Controlling", "Dependent", etc. |

Depicted in Figure 3, schema 300 includes connector type data format 321. Generally, connecter type data format 321 can be described as indicated in Table 17.

**Table 17**

| Name | Data Type | Description |
|---|---|---|
| ID | int | Key to the ConnectorType entity and is used to describe the connection type in the Connector entity. |
| TypeName | varchar(50) | A unique name that describes the type of connection. Examples are "Collaborative", "Controlling", "Dependent", etc. |
| Description | varchar(4000) | A detailed description of the connection type and helps modelers understand what connections mean in their models. |

Depicted in Figure 3, schema 300 includes connector port data format 322. Generally, connecter port data format 322 can be described as indicated in Table 18.

**Table 18**

| Name | Data Type | Description |
|---|---|---|
| ConnectorID | int | A reference to the Connector entity and serves to link a specific connection between two capabilities with a specific input/output item. |
| PortID | int | A reference to the Port entity (input/output item) and serves to identify the input/output item that flows along a specific connection. |
| Comments | varchar(4000) | More detailed commentary about this flow of an item along this connection. |

Depicted in Figure 3, schema 300 includes role data format 309. Generally, role data format 309 can be described as indicated in Table 19.

**Table 19**

| Name | Data Type | Description |
|---|---|---|
| ID | int | Key to the Role entity and is used to relate this role to Capability entities. |
| ModelID | int | Indicates what model this role entity belongs to. |
| Name | varchar (100) | A unique name for the role within this model. A role describes a type of person or user involved in performing capabilities. |
| Description | varchar(2000) | Provides a description of the role and may provide guidance to modelers in their choice of roles to associate with capabilities. |

Depicted in Figure 3, schema 300 includes capability role data format 308. Generally, capability role data format 308 can be described as indicated in Table 20.

**Table 20**

| Name | Data Type | Description |
|---|---|---|
| CapabilityID | int | References a specific capability and serves to link that capability with a specific role. |
| RoleID | int | References a specific role and links it to the referenced capability. |
| Count | int | Indicates the number of people in this role that are required to perform this capability. A value of '0' indicates that the role participation has not been quantified. |

Depicted in Figure 3, schema 300 includes SLE type data format 304. Generally, SLE type data format 304 can be described as indicated in Table 21.

**Table 21**

| Name | Data Type | Description |
|---|---|---|
| ID | int | Key to the SLEType entity and is used to relate this role to CapabilitySLE entities. |
| Name | varchar(100) | Uniquely names the type of service level that is described in this entity. This entity is assumed to be read-only by modelers because the modeling tools rely on the value of these entries to visualize service levels. Some values for service level types include "Duration", "Throughput", "Monetary Cost", ''Time Cost" and "Concurrency" |
| Description | varchar(4000) | A detailed description of the service level type and how to describe specific service levels related to capabilities. |

Depicted in Figure 3, schema 300 includes Capability SLE data format 306. Generally, Capability SLE data format 306 can be described as indicated in Table 22.

**Table 22**

| Name | Data Type | Description |
|---|---|---|
| ID | int | Key to the Role entity and is used to relate this role to Capability entities. |
| SLETypeID | int | References the SLEType entity and identifies a specific way to measure a service level. |
| Name | varchar(50) | A unique name for the service level definition. |
| CapabilityID | int | References the capability to which this service level applies. |
| MeasurementPeriodType | varchar(50) | Names the unit of measure for the service level. For "Duration" type service levels, this should be a time period. For a "Monetary Cost" SLE type, "Dollars" or "Thousands of dollars" would be appropriate. |
| MeasurementPeriodLen | int | If the SLE type references a "Throughput" type of SLE, this field indicates the length of the measurement period for throughput. |
| MetricCount | int | An actual (current status/performance or historical performance) measurement of the SLE, such as the number of days of duration, the number of items completed for throughput, the amount of dollars for monetary cost, etc. |
| Goal | int | A target for future performance such as the number of days of duration, the number of items completed for throughput, the amount of dollars for monetary cost, etc. |
| VarianceThreshold | int | How much variation in performance (e.g., from a goal) is tolerated before a variation is noted or notification is sent. For example, when a variance threshold is exceeded an electronic mail message can be sent to appropriate management personnel |
| Description | varchar(2000) | A detailed description of the SLE for this capability. |

Depicted in Figure 3, schema 300 includes Capability SLE Port data format 307. Generally, Capability SLE port data format 307 can be described as indicated in Table 23.

**Table 23**

| | | |
|---|---|---|
| CapabilitySLEID | int | References a particular service level for a specific capability as described in a CapabilitySLE entity. It serves to link a particular service level to a particular input or output item. |
| PortID | int | References a particular input or output item of a capability and links a service level to the specific item that is being measured. For example, this might reference mortgage approvals for a duration service level for a mortgage processing capability and the entire service level definition might thereby describe that 100 mortgage approvals are completed every day for the mortgage processing capability. |

It should be understood that schema 300 is merely one example of a business capability modeling schema. It would be apparent to one skilled in the art, after having reviewed this description, that embodiments of the present invention can be used with a wide variety of other business capability modeling schemas, in addition to schema 300. Further, modeling business capabilities does not require that capability attributes for all the data formats in schema 300 be accessible. For example, a capability and connecter can be used to model a business capability based on capability data format 314 and connector data format 323, without accessing capability attributes correspond to other data formats. Thus, schema 300 defines data formats for business capability attributes that are accessed, but does not require that all data formats be populated to generate a business capability model.

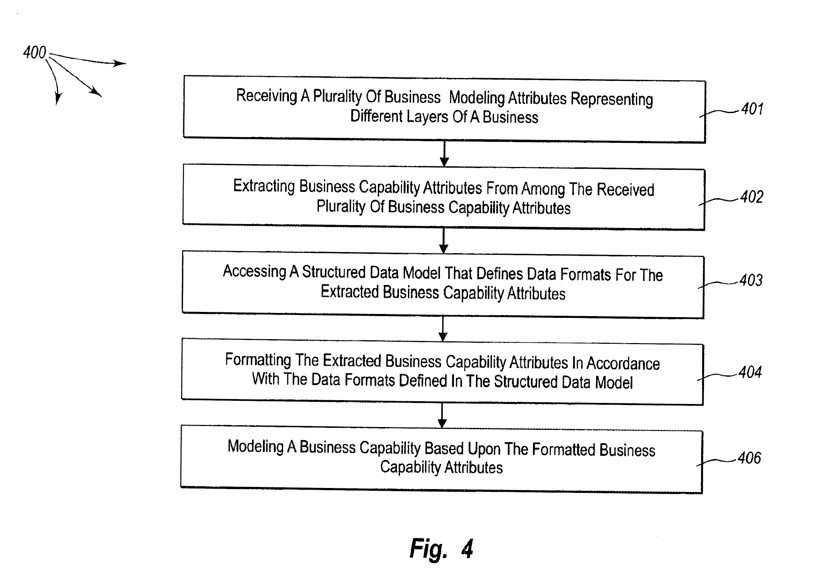

Figure 4 illustrates an example flowchart of a method 400 for flexibly modeling a business capability based on stable criteria. The method 400 will be described with respect to the components and data in architectures 100 and 200 and with respect to schema 300.

Method 400 includes an act receiving a plurality of business modeling attributes representing different layers of a business (act 401). For example, computer system 101 can receive business modeling attributes 102. Business modeling attributes 102 can be received through user-interface 112, from an attributes file, and/or through computer network communication with another computer system. Business modeling attributes 102 can include a plurality of business modeling attributes from various business layers, such as, for example, a business capability layer, a business procedure layer, a business process flow layer, and business organization structure layer, etc. Some received business modeling attributes can include attribute type values or expressly indicated stability values, while others do not include attribute types or expressly indicated stability values.

Method 400 includes an act of extracting business capability attributes, from among the received plurality of business modeling attributes (act 402). For example, attribute identification module 113 can extract business capability attributes 131 from business modeling attributes 102. When appropriate, attribute identification module 113 can call an attribute typing algorithm (e.g., attribute typing algorithm 246) and can compare calculated and/or received attribute types to attribute selection criteria 122. Thus in some embodiments, a subset of received business modeling attributes are identified such that a more objective model of the business based upon business capabilities can be generated.

When appropriate, attribute identification module 113 can store extracted business capability attributes in extracted business modeling attributes 123.

Method 400 includes an act of accessing a structured data model that defines data formats for the extracted business capability attributes (act 403). For example, attribute formatting module 114 can access data models 121. Data models 121 can include a schema, such as, for example, schema 300, that defines data formats for business capability attributes.

Method 400 includes an act of formatting the extracted business capability attributes in accordance with the data formats defined in the structured data model (act 404). For example, attribute formatting module 114 can format business capability attributes 131 in accordance with data formats defined in schema 300. Thus, various business capability attributes can be formatted in accordance with different data types. For example, business capability attributes representing connectors can be formatted in accordance with connector data format 323. Similarly, business capability attributes representing SLEs can be can be formatted in accordance with capability SLE data format 306. Likewise, business capability attributes representing ports can be formatted in accordance with port data format 324. Further, other business capability attributes can be formatted in accordance with corresponding data formats of schema 300.

Method 400 includes an act of modeling a business capability based upon the formatted business capability attributes (act 406). For example, modeling module 116 can generated business capability model 103 based on (extracted and) formatted capability attributes (e.g. formatted in accordance with schema 300) from business modeling attributes 102. As appropriate, business capability model 103 can include business capabilities, connectors, ports, SLEs, etc. Business capability model 103 can be presented graphically at user-interface 112.

Subsequently to generating business capability model 103, business modeling attributes from other business layers (e.g., business producers, business process flow, business organizational structure etc.) can be re-attached to business capability model 103. Thus, other (potentially less stable) business data can be added back into a business capability model, providing additional views of a corresponding business. In some embodiments, additional models are generated for business model attributes from other business layers. For example, business capability modeler 111 can extract and format business procedure attributes 132 to generate a corresponding business procedure model. These additional models can be attached to or presented along with business capability models, providing additional views of a corresponding business.

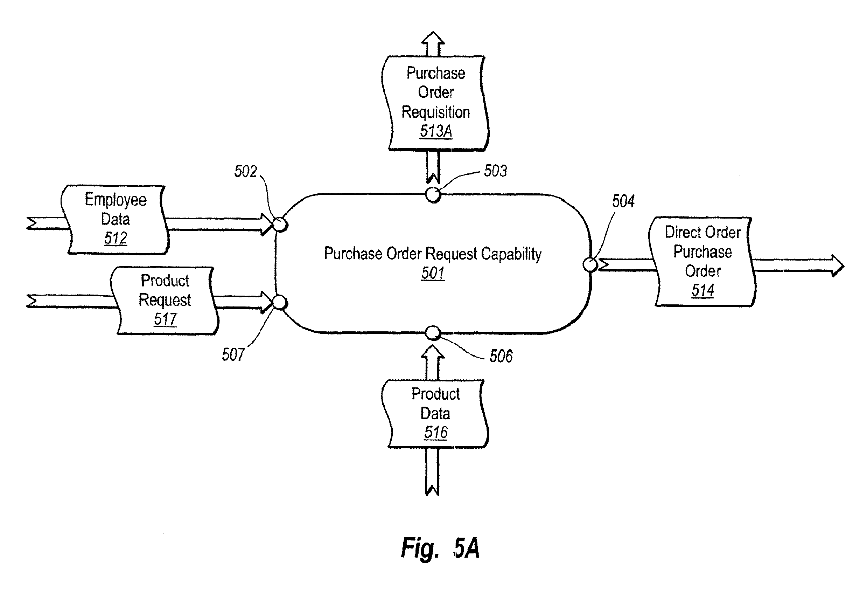

Figure 5A illustrates an example of a modeled business capability. Figure 5A, includes purchase order request capability 501 (e.g., modeled based on capability data format 314). Purchase order request capability 501 includes ports 502, 506, and 507 (e.g., modeled based on port data format 324) that receive employee data 512, product data 516, and product request 517 respectively (e.g., from other business capabilities). Purchase order request capability 501 can use employee data 512, product data 516 and produce request 517 to formulate a purchase order request.

Purchase order request capability 501 includes ports 503 and 504 (e.g., modeled based on port data format 324) that can send purchase order requisition 513A and direct order purchase order 514 respectively (e.g., to other business capabilities). Purchase order request capability 501 can include logic that determines, based on one or more of receive employee data 512, product data 516 and produce request 517, whether purchase order requisition 513 and direct order purchase order 514 is to be sent

Embodiments of the present invention can also be used to model a network of business capabilities. A first business capability is modeled based upon formatted business capability attributes. A second business capability is modeled based upon the formatted business capability attributes. A connection between the first business capability and the second capability is modeled based upon the formatted business capability attributes.

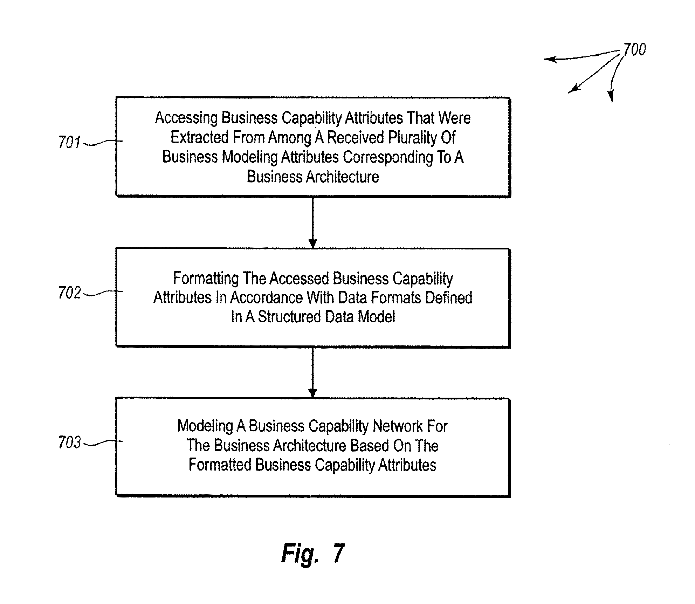

Figure 7 illustrates an example flowchart of a method 700 for modeling a network of business capabilities. The method 700 will be described with respect to the modules and data in computer architectures 100 and 200.

Method 700 includes an act of accessing business capability attributes that were extracted from among a received plurality of business modeling attributes corresponding to a business architecture (act 701). Extracted business capability attributes can be extracted from business modeling attributes 102 as previously described, for example, with respect the modules and data in computer architecture 200. For example, attribute formatting module 114 can access business capability attributes 131 (e.g., stored at extracted business modeling attributes 123).

Method 700 includes an act of formatting the accessed business capability attributes in accordance with data formats defined in a structured data model (act 702). For example, attribute formatting module 114 can format business capability attributes 131 in accordance with schemas in data models 121 (e.g., including schema 300). Formatting extracted business capability attributes can include formatting attributes for business capabilities, connections, ports, SLE, etc.

Method 700 includes an act of modeling a business capability network for the business architecture based on the formatted business capability attributes (act 703). For example, modeling module 116 can model a business capability network for the business architecture based on formatted business capability attributes 131. Modeling a network of business capabilities can include modeling business capabilities, connections, ports, SLEs, etc.

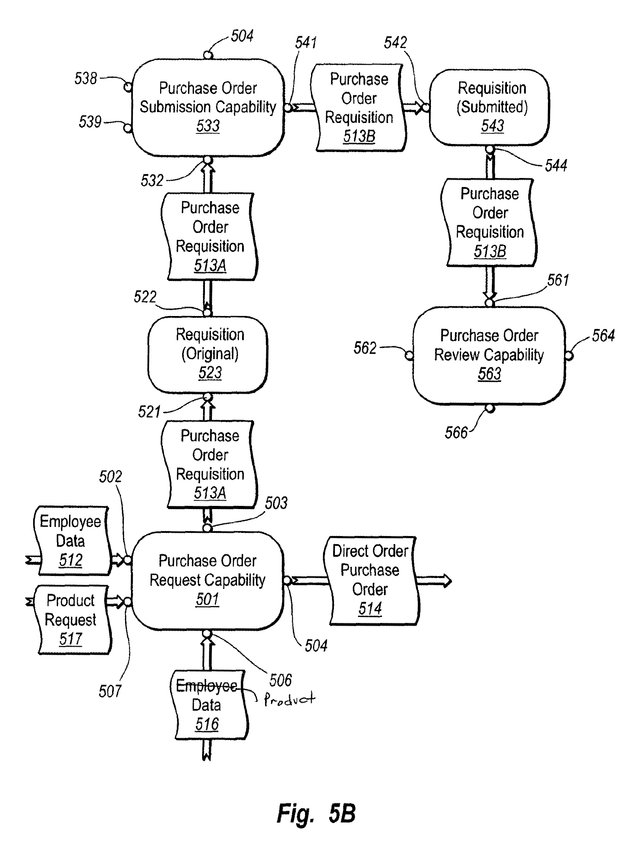

Figure 5B illustrates a first view of an example of a network of modeled business capabilities including the modeled business capability in Figure 5A. Figure 5B depicts a business capability network including purchase order request capability 501. As depicted, purchase order request capability 501 (a capability) sends purchase order request 513A out of port 503 to requisition 523 (a connector).

Requisition 523 receives purchase order requisition 513A at port 512. Requisition 523 sends purchase order requisition 513A out of port 522 to purchase order submission capability 533. Thus, requisition 523 transfers purchase order requisition 513A from purchase order request capability 501 to purchase order submission capability 533. Accordingly, a connector can be viewed as a capability wherein the capability of the connector is to transfer data between other capabilities.

Purchase order submission capability 533 receives purchase order requisition 513A at port 532. Purchase order submission capability 533 includes other ports, including ports 536, 538, 539, and 541. Each of the ports 536, 538, 539, and 541 can be used to send data to and/or receive data from other capabilities or connectors. More specifically, purchase order submission capability 532 sends purchase order 513B out of port 541 to requisition 543 (a connector). Although similar to purchase order requisition 513A, purchase order requisition 513B can differ from purchase order 513A as a result of processing at purchase order submission capability 532.

Requisition 543 receives purchase order requisition 5138 at port 542. Requisition 543 sends purchase order requisition 513B out of port 544 to purchase order review capability 563. Purchase order review capability 563 receives purchase order requisition 513B at port 561. Purchase order review capability 563 includes other ports, including ports 562, 564, and 566. Each of the ports 562, 564, and 566 can be used to send data to and/or receive data from other capabilities or connectors.

Although one-way ports and connectors have been depicted in Figure 5B, it should be understood that embodiments of the present invention can include two-way ports and/or two-way connectors. For example, it may be that, from time to time, requisition 523 also transfers data from purchase order submission capability 533 (coming out of port 532 and into port 522) to purchase order request capability 501 (coming out of port 521 and into portion 503). Similarly, it may be that, from time to time, requisition 543 also transfers data from purchase order review capability 563 (coming out of port 561 and into port 544) to purchase order submission capability 533 (coming out of port 542 and into port 541).

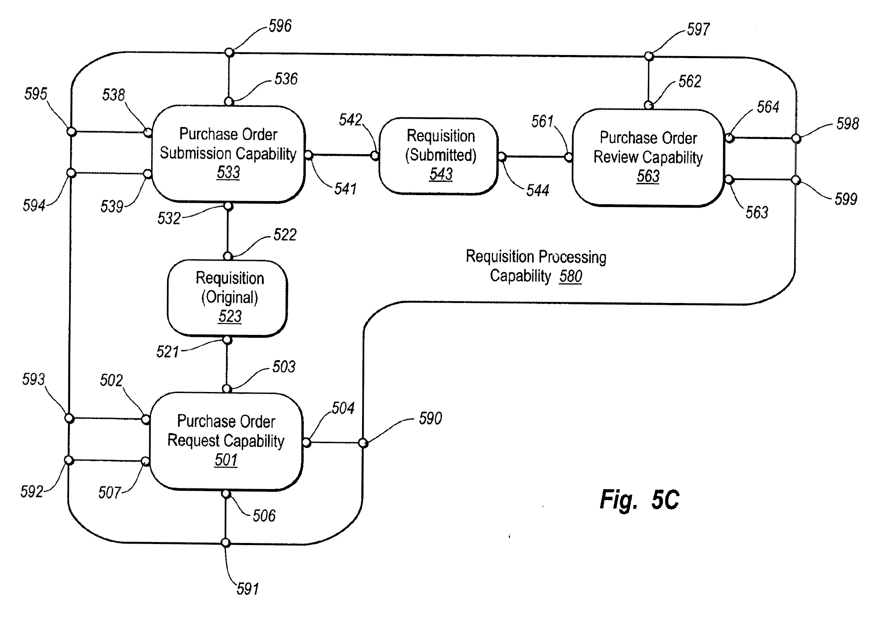

A network of business capabilities can also be represented in a manner that abstracts the data exchanged between various business capabilities and connectors in the business capability network. Further, in some embodiments, a network of more granular business capabilities can be used to model a more coarse business capability. Figure 5C illustrates a second view of the example of a network of modeled business capabilities in Figure 5B.

The network of business capabilities in Figure 5C abstracts out the data that is exchanged between the business capabilities and connections in Figure 5B. Figure 5C further depicts that the more granular business capabilities and connections in Figure 5B can be used to model a more coarse requisition processing capability 580. Ports 590-599 represent that requisition processing capability 580 can exchange data with other business capabilities and connectors, for example, included in part of general procurement network of business capabilities.

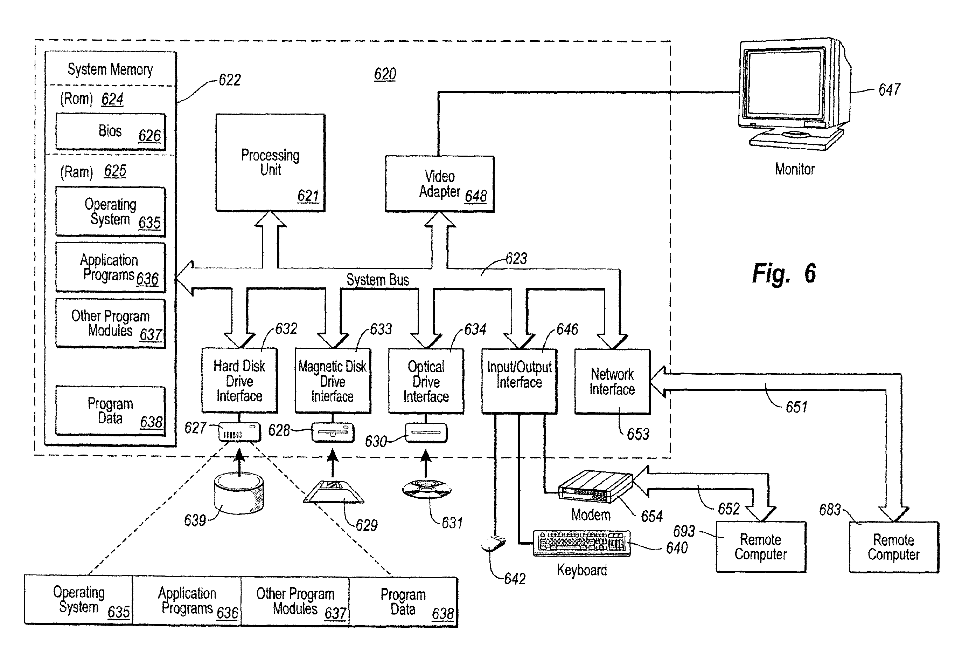

Figure 6 and the following discussion are intended to provide a brief, general description of a suitable computing environment in which the invention may be implemented. Although not required, the invention can be implemented in the general context of computer-executable instructions, such as program modules, being executed by computer systems. Generally, program modules include routines, programs, objects, components, data structures, and the like, which perform particular tasks or implement particular abstract data types. Computer-executable instructions, associated data structures, and program modules represent examples of the program code means for executing acts of the methods disclosed herein.

With reference to Figure 6, an example system for implementing the invention includes a general-purpose computing device in the form of computer system 620, including a processing unit 621, a system memory 622, and a system bus 623 that couples various system components including the system memory 622 to the processing unit 621. Processing unit 621 can execute computer-executable instructions designed to implement features of computer system 620, including features of the present invention. The system bus 623 may be any of several types of bus structures including a memory bus or memory controller, a peripheral bus, and a local bus using any of a variety of bus architectures. The system memory includes read only memory ("ROM") 624 and random access memory ("RAM") 625. A basic input/output system ("BIOS") 626, containing the basic routines that help transfer information between elements within computer system 620, such as during start-up, may be stored in ROM 624.

The computer system 620 may also include magnetic hard disk drive 627 for reading from and writing to magnetic hard disk 639, magnetic disk drive 628 for reading from or writing to removable magnetic disk 629, and optical disk drive 630 for reading from or writing to removable optical disk 631, such as, or example, a CD-ROM or other optical media. The magnetic hard disk drive 627, magnetic disk drive 628, and optical disk drive 630 are connected to the system bus 623 by hard disk drive interface 632, magnetic disk drive-interface 633, and optical drive interface 634, respectively. The drives and their associated computer-readable media provide nonvolatile storage of computer-executable instructions, data structures, program modules, and other data for the computer system 620. Although the example environment described herein employs magnetic hard disk 639, removable magnetic disk 629 and removable optical disk 631, other types of computer readable media for storing data can be used, including magnetic cassettes, flash memory cards, digital versatile disks, Bernoulli cartridges, RAMs, ROMs, and the like.

Program code means comprising one or more program modules may be stored on hard disk 639, magnetic disk 629, optical disk 631, ROM 624 or RAM 625, including an operating system 635, one or more application programs 636, other program modules 637, and program data 638. A user may enter commands and information into computer system 620 through keyboard 640, pointing device 642, or other input devices (not shown), such as, for example, a microphone, joy stick, game pad, scanner, or the like. These and other input devices can be connected to the processing unit 621 through input/output interface 646 coupled to system bus 623. Input/output interface 646 logically represents any of a wide variety of different interfaces, such as, for example, a serial port interface, a PS/2 interface, a parallel port interface, a Universal Serial Bus ("USB") interface, or an Institute of Electrical and Electronics Engineers ("IEEE") 1394 interface (i.e., a FireWire interface), or may even logically represent a combination of different interfaces.

A monitor 647 or other display device is also connected to system bus 623 via video interface 648. Speakers or other audio output device is also connected to system bus 623 via an audio interface. Other peripheral output devices (not shown), such as, for example, printers, can also be connected to computer system 620.

Computer system 620 is connectable to computer networks, such as, for example, an office-wide or enterprise-wide computer network, a home network, an intranet, and/or the Internet. Computer system 620 can exchange data with external sources, such as, for example, remote computer systems, remote applications, and/or remote databases over such computer networks.

Computer system 620 includes network interface 653, through which computer system 620 receives data from external sources and/or transmits data to external sources. As depicted in Figure 1, network interface 653 facilitates the exchange of data with remote computer system 683 via link 651. Network interface 653 can logically represent one or more software and/or hardware modules, such as, for example, a network interface card and corresponding Network Driver Interface Specification ("NDIS") stack. Link 651 represents a portion of a computer network (e.g., an Ethernet segment), and remote computer system 683 represents a node of the computer network.

Likewise, computer system 620 includes input/output interface 646, through which computer system 620 receives data from external sources and/or transmits data to external sources. Input/output interface 646 is coupled to modem 654 (e.g., a standard modem, a cable modem, or digital subscriber line ("DSL") modem), through which computer system 620 receives data from and/or transmits data to external sources. As depicted in Figure 6, input/output interface 646 and modem 654 facilitate the exchange of data with remote computer system 693 via link 652. Link 652 represents a portion of a computer network and remote computer system 693 represents a node of the computer network.

While Figure 6 represents a suitable operating environment for the present invention, the principles of the present invention may be employed in any system that is capable of, with suitable modification if necessary, implementing the principles of the present invention. The environment illustrated in Figure 6 is illustrative only and by no means represents even a small portion of the wide variety of environments in which the principles of the present invention may be implemented.

In accordance with the present invention, database applications, message applications, and user-interfaces as well as associated data, including schemas, message items, content, attachments, message silos, document silos, and queries may be stored and accessed from any of the computer-readable media associated with computer system 620. For example, portions of such modules and portions of associated program data may be included in operating system 635, application programs 636, program modules 637 and/or program data 638, for storage in system memory 622.

When a mass storage device, such as, for example, magnetic hard disk 639, is coupled to computer system 620, such modules and associated program data may also be stored in the mass storage device. In a computer network environment, program modules depicted relative to computer system 620, or portions thereof, can be stored in remote memory storage devices, such as, system memory and/or mass storage devices associated with remote computer system 683 and/or remote computer system 693. Execution of such modules may be performed in a distributed environment as previously described.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes, which come within the meaning and range of equivalency of the claims, are to be embraced within their scope.

What is claimed and desired secured by United States Letters Patent is:

## Claims

1. At a computer system, a method for modeling a business capability, the method comprising:
an act of receiving a plurality of business modeling attributes representing different layers of a business;
an act of extracting business capability attributes from among the received plurality of business modeling attributes;
an act of accessing a structured data model that defines data formats for the extracted business capability attributes;
an act of formatting the extracted business capability attributes in accordance with the data formats defined in the structured data model; and
an act of modeling a business capability based upon the formatted business capability attributes.

2. The method as recited in claim 1, wherein the act of receiving a plurality of business modeling attributes representing different layers of a business comprises an act of receiving a plurality of business capability attributes that have varied levels of stability.

3. The method as recited in claim 1, wherein the act of receiving a plurality of business modeling attributes representing different layers of a business comprises an act of receiving a business modeling attribute that has an expressly indicated capability attribute type.

4. The method as recited in claim 3, wherein the act of receiving a plurality of business modeling attributes representing different layers of a business comprises an act of receiving a business modeling attribute selected from among business capability attributes, business procedure attributes, business process flow attributes, and business organizational attributes.

5. The method as recited in claim 3, wherein the act of receiving a plurality of business modeling attributes representing different layers of a business comprises an act of receiving a capability attribute that has an absolute stability value.

6. The method as recited in claim 1, wherein the act of extracting business capability attributes from among the received plurality of business modeling attributes comprises an act of comparing the received plurality of business modeling attributes to attribute selection criteria.

7. The method as recited in claim 1, wherein the act of extracting business capability attributes from among the received plurality of business modeling attributes comprises an act of identifying a business capability attributes having an absolute stability value that indicates the business capability attribute is stable.

8. The method as recited in claim 1, wherein the act of extracting business capability attributes from among the received plurality of business modeling attributes comprises an act of extracting a business modeling attribute having an attribute type indicative of the business modeling attribute corresponding to a business capability business layer.

9. The method as recited in claim 1, wherein the act of extracting business capability attributes from among the received plurality of business modeling attributes comprises an act of executing an attribute typing algorithm to calculate an attribute type for a received business modeling attribute.

10. The method as recited in claim 1, wherein the act of extracting business capability attributes from among the received plurality of business modeling attributes comprises an act of extracting business capability attributes from among business molding that including business capability attributes and one or more other business modeling attributes corresponding to other business layers, the one or more other business modeling attributes be selected from among business procedure attributes, business process flow attributes, and business organizational attributes.

11. The method as recited in claim 1, wherein the act of accessing a structured data model that defines data formats for the extracted business capability attributes comprises an act of accessing a business capability modeling schema.

12. The method as recited in claim 1, wherein the act of formatting the extracted business capability attributes in accordance with the data formats defined in the structured data model comprises an act of formatting the extracted stable business capability attributes in accordance with data formats in a business capability modeling schema.

13. The method as recited in claim 1, wherein the act of modeling a business capability based upon the formatted business capability attributes comprises an act of generating a graphical representation of the business capability.

14. The method as recited in claim 1, wherein the act of modeling a business capability based upon the formatted business capability attributes comprises an act of modeling the business capability based on the schematized business capability attributes.

15. The method as recited in claim 1, wherein the act of modeling the business capability based upon the formatted business capability attributes comprises an act of modeling the business capability to include a port for exchanging data with other business capabilities.

16. The method as recited in claim 1, further comprising:
an act of generating another model based upon other business modeling attributes from the received plurality of modeling business attributes, the other business modeling attributes corresponding to other business layers; and
an act of associating the other model with the model of the business capability.

17. The method as recited in claim 1, further comprising
an act of modeling a second business capability based upon the formatted business capability attributes; and
an act of modeling a connection between the business capability and the second capability based upon the formatted business capability attributes.

18. The method as recited in claim 17, further comprising:
an act of exchanging business capability related data between the first business capability and the second business capability over the modeled connection.

19. The method as recited in claim 17, wherein the act of modeling a second business capability based upon the formatted business capability attributes comprises an act of generating a graphical representation of the second business capability; and wherein the act of modeling a connection between the business capability and the second capability based upon the formatted business capability attributes comprises an act of generating a graphical representation of the modeled connection.

20. The method as recited in claim 17, further comprising:
an act of modeling a connection from the connected first and second business capabilities to one or more other business capabilities.

21. A computer program product for use in a computer system, the computer program product, the computer program product comprising one or more computer-readable media having stored thereon computer-executables instructions, that when executed by a processor, cause the computer system to perform the following:
receive a plurality of business modeling attributes representing different layers of a business;
extract business capability attributes from among the received plurality of business modeling attributes;
access a structured data model that defines data formats for the extracted business capability attributes;
format the extracted business capability attributes in accordance with the data formats defined in the structured data model; and
model a business capability based upon the formatted business capability attributes.

22. The computer program product as recited in claim 21, wherein computer-executable instructions, that when executed, cause the computer system to receive a plurality of business modeling attributes representing different layers of a business comprise computer-executable instructions, that when executed, cause the computer system to receive a plurality of business modeling attributes that have varied levels of stability.

23. The computer program product as recited in claim 21, wherein computer-executable instructions, that when executed, cause the computer system to format the extracted business capability attributes in accordance with the data formats defined in the structured data model comprise computer-executable instructions, that when executed, cause the computer system to format the extracted business capability attributes in accordance with data formats in a business capability modeling schema.

24. The computer program product as recited in claim 21, wherein computer-executable instructions, that when executed, cause the computer system to model the business capability based on the formatted business capability attributes comprise computer-executable instructions, that when executed, cause the computer system to generate a graphical representation of the business capability.

25. The computer program product as recited in claim 21, wherein computer-executable instructions, that when executed, cause the computer system to model a business capability based upon the formatted business capability attributes comprise computer-executable instructions, that when executed, cause the computer system to model the business capability based on the schematized business capability attributes.

26. The computer program product as recited in claim 21, further comprising computer-executable instructions that, when executed, cause the computer system to perform the following:
model a second business capability based upon the formatted business capability attributes; and
model a connection between the business capability and the second capability based upon the formatted business capability attributes.

27. The computer program product as recited in claim 21, further comprising computer-executable instructions that, when executed, cause the computer system to perform the following:
exchange business capability related data between the first business capability and the second business capability over the modeled connection.

28. One or more computer-readable media having stored thereon a data model for modeling business capabilities, the data model comprising:
a capability field storing one or more capability data format values representing capability data formats for a corresponding one or more business capability attributes, the one or more business capability attributes used to model a business capability;
a port field storing one or more port data format values representing port data formats for a corresponding one or more business capability port attributes, the one or more business capability port attributes used to model business capability ports for a business capability that was modeled based on one or more business capability attributes formatted in accordance with the capability data formats represented in the capability field;
a process field storing one or more process data format values representing process data formats for a corresponding one or more business capability process attributes, the one or more business capability process attributes used to model business capability processes for a business capability that was modeled based on one or more business capability attributes formatted in accordance with the capability data formats represented in the capability field;
a connection field storing one or more connection data format values representing connection data formats for a corresponding one or more business capability connection attributes, the one or more business capability connection attributes used to model business capability connections for a business capability that was modeled based on one or more business capability attributes formatted in accordance with the capability data formats represented in the capability field; and
a service level field storing one or more service level data format values representing service level data formats for a corresponding one or more business capability service level attributes, the one or more business capability service level attributes used to model business capability service levels for a business capability that was modeled based on one or more business capability attributes formatted in accordance with the capability data formats represented in the capability field.

29. One or more computer-readable media having stored thereon a data model for modeling business capabilities as recited in claim 28, wherein the capability field comprises:
a sourcing type field storing a source type data format value representing a sourcing type data format for a corresponding business capability sourcing type attribute, the business capability sourcing type attribute for indicating when a business capability is outsourced.

30. One or more computer-readable media having stored thereon a data model for modeling business capabilities as recited in claim 28, wherein the capability field comprises:
a reference from a hierarchy field, the hierarchy field storing one or more hierarchy data format values representing hierarchy data formats for a corresponding one or more business capability hierarchy attributes used to model the business capability;
a reference to a property field, the property field storing one or more property data format values representing property data formats for a corresponding one or more business capability property attributes used to model the business capability;
a reference to port field, the port field storing one or more port data format values representing port data formats for a corresponding one or more business capability port attributes used to model the business capability;
a reference to role field, the role field storing one or more role data format values representing role data formats for a corresponding one or more business capability role attributes used to model the business capability;
a reference to the connector field; and
a reference to the service level field.

31. One or more computer-readable media having stored thereon a data model for modeling business capabilities as recited in claim 28, the data model further comprising:
a property name data type field storing a property name data type format value representing a property name data type data format for a corresponding business capability property name data type attribute, the business capability property name data type attribute for indicating the data type of a business capability that was modeled based on one or more business capability attributes formatted in accordance with the capability data formats represented in the capability field.

32. One or more computer-readable media having stored thereon a data model for modeling business capabilities as recited in claim 28, wherein the port field comprises:
a reference from a item type field, the item type field storing one or more item type data format values representing item type data formats for a corresponding one or more business capability item type attributes, one or more business capability item type attributes used to model a business capability port in accordance with the port data formats represented in the port field;
a reference from a schema field, the schema field storing one or more item schema data format values representing schema data formats for a corresponding one or more business capability schema attributes, the one or more business capability schema attributes used to relate the data model to input/output items of a business capability port that was modeled in accordance with the port data formats represented in the port field;
a reference to capability port field, the capability port field storing one or more capability port data format values representing capability port data formats for a corresponding one or more business capability port attributes, one or more business capability port attributes used to model a business capability port in accordance with the port data formats represented in the port field; and
a reference to service level port field, the service level port field storing one or more service level port data format values representing service level port data formats for a corresponding one or more business capability service level port attributes, the one or more business capability service level port attributes used to model a business capability port in accordance with the port data formats represented in the port field.

33. One or more computer-readable media having stored thereon a data model for modeling business capabilities as recited in claim 28, the data model further comprising:
a capability port direction field, the capability port direction field storing a capability port direction data format value representing a capability port direction data format for a corresponding business capability port direction used to model a business capability port in accordance with the port data formats represented in the port field.

34. One or more computer-readable media having stored thereon a data model for modeling business capabilities as recited in claim 28, the data model further comprising:
a capability port usage type field, the capability port usage type field storing a capability port usage type data format value representing capability port usage type data format for a corresponding business capability port usage type attribute, the business capability port usage type attribute used to model a business capability port in accordance with the port data formats represented in the port field.

35. One or more computer-readable media having stored thereon a data model for modeling business capabilities as recited in claim 28, wherein the process field comprises:
a reference to a process capability field, the process capability field storing one or more process capability data format values representing process capability data formats for a corresponding one or more business capability process capability attributes, the one or more business capability process capability attributes used to model a business capability process in accordance with the process data formats represented in the process field.

36. One or more computer-readable media having stored thereon a data model for modeling business capabilities as recited in claim 28, wherein the connection field comprises:
a reference from a connector port field, the connector port field storing one or more connector port data format values representing connector port data formats for a corresponding one or more business capability connector port attributes, the one or more business capability connector port attributes used to model a business capability connection in accordance with the connection data formats represented in the connection field;
a reference from a connector type field, the connector type field storing one or more connector type data format values representing connector type data formats for a corresponding one or more business capability connector type attributes, the one or more business capability connector type attributes used to model a business capability connection in accordance with the connection data formats represented in the connection field; and
a reference to a process capability field, the process capability field storing one or more process capability data format values representing process capability data formats for a corresponding one or more business capability process capability attributes, the one or more business capability process capability attributes used to model a business capability connection in accordance with the connection data formats represented in the connection field.

37. One or more computer-readable media having stored thereon a data model for modeling business capabilities as recited in claim 36, the data model further comprising:
a connector type field storing a connector type data format value representing a connector type data format for a corresponding business capability connector type used to model a business capability connection in accordance with the connection data formats represented in the connection field.

38. One or more computer-readable media having stored thereon a data model for modeling business capabilities as recited in claim 28, wherein the service level field comprises:
a reference from the capability field;
a reference from a service level type field, the service level type field storing one or more service level type data format values representing service level type data formats for a corresponding one or more business capability service level type attributes, one or more business capability service level type attributes the to model a business capability service level in accordance with the service level data formats represented in the service level field; and
a reference to a service level port field, the service level port field storing one or more service level port data format values representing service level port data formats for a corresponding one or more business capability service level port attributes, the one or more business capability service level port attributes used to model a business capability service level in accordance with the service level data formats represented in the service level field; and

39. One or more computer-readable media having stored thereon a data model for modeling business capabilities as recited in claim 38, the data model further comprising:
a measurement period type field storing a measurement period type data format value representing a measurement period type data format for a corresponding service level measurement period type attribute, the service level measurement period type attribute used to indicate the unit of measurement for a business capability service level modeled in accordance with the service level data formats represented in the service level field.

40. One or more computer-readable media having stored thereon a data model for modeling business capabilities as recited in claim 38, the data model further comprising:
a measurement period length field storing a measurement period length data format value representing a measurement period length data format for a corresponding service level measurement period length attribute, the service level measurement period length attribute used to indicate the throughput type for a business capability service level modeled in accordance with the service level data formats represented in the service level field.

41. One or more computer-readable media having stored thereon a data model for modeling business capabilities as recited in claim 38, the data model further comprising:
a metric count field storing a metric count data format value representing a metric count data format for a corresponding service level metric count attribute, the service level metric count attribute used to indicate the duration of a measurement for a business capability service level modeled in accordance with the service level data formats represented in the service level field.

42. At a computer system, a method for modeling a business, the method comprising:
an act of accessing business capability attributes that were extracted from among a received plurality of business modeling attributes corresponding to a business architecture;
an act of formatting the accessed business capability attributes in accordance with data formats defined in a structured data model; and
an act of modeling a business capability network for the business architecture based on the formatted business capability attributes.

43. The method as recited in claim 42, wherein the act of modeling a business capability network comprises:
an act of modeling a first business capability based on the formatted business capability attributes;
an act of modeling a second business capability based on the formatted business capability attributes; and
an act of modeling a connection between the first modeled business capability and the second modeled business capability.

44. The method as recited in claim 43, wherein further comprising:
an act of modeling one or more other connections between the connected first and second modeled business capabilities and one or more other modeled business capabilities.
